# EUROPEAN PATENT SPECIFICATION

(11) **EP 3 574 613 B1**
(45) Date of publication and mention of the grant of the patent: **22.06.2022**
(21) Application number: 18761131.4
(22) Date of filing: 23.02.2018
(51) Int. Cl.: G06F 9/50

(54) **UNIFIED RESOURCE MANAGEMENT IN A DATA CENTER CLOUD ARCHITECTURE**
EINHEITLICHE RESSOURCENVERWALTUNG IN EINER CLOUD-ARCHITEKTUR EINES DATENCENTERS
GESTION UNIFIÉE DE RESSOURCES DANS UNE ARCHITECTURE EN NUAGE DE CENTRE DE DONNÉES

(30) Priority: 02.03.2017 US 201715448444
(43) Date of publication of application: 04.12.2019
(73) Proprietor: Huawei Technologies Co., Ltd., Longgang District Shenzhen, Guangdong 518129 (CN)
(72) Inventor: HU, Luhui, Shenzhen, Guangdong 518129 (CN); ZANG, Hui, Shenzhen, Guangdong 518129 (CN); HU, Ziang, Shenzhen, Guangdong 518129 (CN)
(74) Representative: Isarpatent
(86) International application number: PCT/CN2018/076994
(87) International publication number: WO 2018/157757

(56) References cited:
- WO-A1-2012/165937
- CN-A- 1 988 549
- CN-A- 105 052 074
- US-A1- 2015 358 251
- US-A1- 2016 188 594
- US-B1- 7 984 151
- GOSCINSKI A ET AL: "RESOURCE MANAGEMENT IN LARGE DISTRIBUTED SYSTEMS", OPERATING SYSTEMS REVIEW, ACM, NEW YORK, NY, US, vol. 24, no. 4, 1 October 1990 (1990-10-01), pages 7-25, XP000273166, ISSN: 0163-5980, DOI: 10.1145/94574.94575

## Description

### FIELD OF THE INVENTION

This invention claims priority of U.S. non-provisional patent application Serial No. 15/448,444, filed on March 2, 2017, and entitled "Unified resource management in a data center cloud architecture".

### FIELD OF THE INVENTION

The present invention relates to a cloud architecture for management of data center resources, and more particularly to unified resource management solutions implemented within the cloud architecture.

### BACKGROUND

The "cloud" is an abstraction that relates to resource management over a network and, more specifically, to a data center architecture that provides a platform for delivering services via a network. For example, the cloud may refer to various services delivered over the Internet such as network-based storage services or compute services. Typical cloud architecture deployments include a layered hierarchy that includes a physical layer of network hardware, and one or more software layers that enable users to access the network hardware. For example, one common type of cloud architecture deployment includes a physical layer of network resources (e.g., servers, storage device arrays, network switches, etc.) accompanied by a multi-layered hierarchical software framework that includes a first layer that implements Infrastructure as a Service (IaaS), a second layer that implements Platform as a Service (PaaS), and a third layer that implements Software as a Service (SaaS). In general, although there may be exceptions, resources in the third layer are dependent on resources in the second layer, resources in the second layer are dependent on resources in the first layer, and resources in the first layer.

US 2016/188594 A1 (RANGANATHAN JAIRAM [US]), 30 June 2016 (2016-06-30) relates to a resource management in a distributed computing environment. It discloses systems and methods for resource management in a distributed computing environment. In some embodiments, a resource manager for a large distributed cluster needs to be able to provide resource responses very quickly. But each query may also not be accurate in initial resource request and will often have to come back to the resource manager multiple times. An artifact may provide low latency query responses by using resource request caching that can handle requests of resources. According to some embodiments, a queuing mechanism may take into account resources currently expended and any resource requirement estimates available in order to make queuing decisions that meet policies set by an administrator. In some embodiments, scheduling decisions are distributed across a cluster of computing systems while still maintaining approximate compliance with resource management policies set by an administrator.

GOSCINSKI A ET AL: « RESOURCE MANAGEMENT IN LARGE DISTRIBUTED SYSTEMS », OPERATING SYSTEMS REVIEW, ACM, NEW YORK, NY, US, vol. 24, no. 4, 1 October 1990 (1990-10-01), pages 7-25, XP000273166, ISSN: 0163-5980, relates to a solution for managing resource allocation in a large distributed system comprising several local distributed systems.

US 2015/358251 A1 (VARGA JOZSEF [HU] ET AL), 10 December 2015 (2015-12-10) relates to a unified cloud resource controller, more precisely, it discloses measures (including methods, apparatuses and computer program products) for realizing unified cloud resource control.

US 7 984 151 B1 (RAZ DANNY [US] ET AL), 19 July 2011 (2011-07-19) relates to determining the placement of user data to optimize resource utilization for distributed systems, in particular, for very large distributed server systems. It discloses determining optimal placement of user data to reduce latency and network utilization for distributed systems.

WO 2012/165937 A1 (MIMOS BERHADET AL.), 6 December 2012 (2012-12-06) relates to a system and method for optimizing physical resources of virtual machines, particularly for cloud computing, wherein allocation of virtual machines on the physical resources are enhanced by utilizing a set of generated mapping rules.are dependent on resources in the physical layer.

In conventional cloud architectures, the resources in the physical layer may be allocated to services implemented in the first layer (i.e., IaaS services). For example, a resource manager for the first layer may be configured to allocate resources in the physical layer to different IaaS services running in the first layer. Examples of IaaS services include the Amazon^{®} Elastic Compute Cloud (EC2) platform, which enables a client to reserve one or more nodes in the physical layer of the cloud to perform some computations or run an application, and the Amazon^{®} Simple Storage Service (S3) storage platform, which provides cloud-based storage in one or more data centers. Each instance of an IaaS service may also include a resource manager that requests resources to implement the service from the resource manager of the first layer and manage the allocated resources within the service.

In turn, the resources in the first layer (i.e., IaaS services) may be allocated to services implemented in the second layer (i.e., PaaS services). For example, a resource manager for the second layer may be configured to allocate resources in the first layer to different PaaS services running in the second layer. Examples of PaaS services include the Microsoft^{®} Azure App Service platform, which enables a client to build applications that run on a Microsoft cloud infrastructure, and the Google^{®} Heroku platform, which enables a client to build applications that run on Amazon^{®} IaaS services. PaaS services typically provide containers that manage infrastructure resources such that applications running in the cloud are easily scalable without the developer having to manage those resources. Again, multiple PaaS services may be run simultaneously in the PaaS layer, each PaaS service including a separate and distinct resource manager that is dependent on the resource manager of the PaaS layer for requesting resources to run the PaaS service.

The resources in the second layer (i.e., PaaS services) may be allocated to services implemented in the third layer (i.e., SaaS services). For example, a resource manager for the third layer may be configured to allocate resources from the second layer to different SaaS services running in the third layer. Examples of SaaS services include Salesforce (i.e., customer relations software), Microsoft Office 365, Google Apps, Dropbox, and the like. Each SaaS service in the third layer may request resources from a PaaS service in the second layer in order to run the application. In turn, the PaaS service may request resources from an IaaS service in the first layer to run the platform on which the application depends, and the IaaS service may manage or request a specific subset of resources in the physical layer in one or more data centers of the cloud to be allocated as infrastructure to run the platform.

As the previous description makes clear, each hierarchical layer of the cloud architecture depends on the hierarchical layer below it for allocated resources, although there may be some exceptions where a hierarchical layer calls a hierarchical layer two or more layers below it for allocated resources (e.g., SaaS to IaaS). Resources in the cloud are partitioned vertically on a first-come, first-served basis where each resource manager only allocates the resources allocated to that resource manager to dependent services corresponding to that resource manager. In addition, the resource pools of the cloud may be partitioned horizontally into different clusters, such as by partitioning the total resources in the physical layer of the cloud into individual clusters partitioned by data center or availability zone. As such, each service implemented in a particular cluster only has access to the resources allocated to that cluster, which may be a subset of the resources included in the cloud. The first-come, first-served bases of vertical resource allocation may include two optimizations: high availability and resource locality. High availability requires resources allocated for a service to be evenly distributed, and resource locality requires allocated resources to be close to a source utilizing those resources (e.g., allocate resources close to a client requesting said resources).

The resulting allocation of resources in such architectures is typically inefficient. For example, a particular application (i.e., SaaS) in one cluster may have a high resource utilization rate as many users are using the particular application, which is slowed down because the application can only run on the resources allocated to that cluster, but another application in another cluster may have a low resource utilization rate because only a few users are using the particular application. The resource manager in the first level that allocates resources in the physical layer to the two different clusters may not have visibility into the resource utilization rates of different applications running on each cluster and, therefore, the resources of the physical layer may be utilized inefficiently.

In addition, each service may be designed for a specific platform or cloud based infrastructure. For example, a resource manager for one SaaS service may be designed to utilize the Google^{®} Heroku platform, while a resource manager for another SaaS service may be designed for the Microsoft^{®} Azure App Service platform. Migrating the service from one platform to another platform may take a large amount of effort as programmers develop a compatible resource manager to enable the service to be run on the different platform. Furthermore, some cloud architectures may have different layers, such as a CaaS/SaaS cloud architecture or even a serverless architecture (e.g., Amazon^{®} AWS Lambda).

In general, it is difficult to migrate services built for a particular cloud architecture to another cloud architecture because a service designed for one architecture may depend on receiving allocated resources from other services, which may not be available in other architectures. Furthermore, resource management is typically limited to requesting resources to be allocated to the service from a "parent" resource manager that has access to a particular resource pool. This type of resource management can result in inefficient allocation of the resources available in the cloud.

### SUMMARY

A mobile device, computer readable medium, and method are provided for solving the object of allocating resources within a cloud in a plurality of hierarchical layers. The method includes the steps of collecting profile data from a plurality of resource agents and allocating a number of resource units to each resource agent in the plurality of resource agents based on the collected profile data. The allocating may be performed via a unified resource manager in communication with the plurality of resource agents. The invention is defined by the independent claims. Dependent claims define preferred embodiments. Hereinafter, aspects will be described which contribute to the understanding of the invention. However, the invention is defined by the attached claims.

In a first aspect, each resource agent in the plurality of resource agents is configured to manage the execution of tasks using the number of resource units allocated to the resource agent.

In a second aspect (which may or may not be combined with the first aspect), the cloud comprises a plurality of nodes in one or more data centers. Each node in the plurality of nodes is in communication with at least one other node in the plurality of nodes through one or more networks.

In a third aspect (which may or may not be combined with the first and/or second aspect), the cloud further comprises a plurality of storage devices. Each storage device in the plurality of storage devices is coupled to a node in the plurality of nodes.

In a fourth aspect (which may or may not be combined with the first, second, and/or third aspects), the unified resource manager includes at least two instances of the resource manager distributed across at least two nodes in the cloud.

In a fifth aspect (which may or may not be combined with the first, second, third, and/or fourth aspects), at least one resource agent in the plurality of resource agents is a resource agent fleet.

In a sixth aspect (which may or may not be combined with the first, second, third, fourth, and/or fifth aspects), the profile data for a particular resource agent includes a resource type identifier, resource utilization information, and a task execution plan.

In a seventh aspect (which may or may not be combined with the first, second, third, fourth, fifth, and/or sixth aspects), the unified resource manager is configured to generate a resource allocation plan that is stored in a distributed file system in the cloud. Each resource agent in the plurality of resource agents is configured to access at least one instance of the resource allocation plan in the distributed file system.

In a eighth aspect (which may or may not be combined with the first, second, third, fourth, fifth, sixth, and/or seventh aspects), the method includes the steps of establishing a secure channel of communication between a secure resource agent and the resource manager, authenticating, via an access control service, a user associated with the secure resource agent as an authorized tenant, collecting profile data from the secure resource agent via the secure channel of communication, and allocating, via the resource manager, a number of resource units to the secure resource agent based on the collected profile data.

In a ninth aspect (which may or may not be combined with the first, second, third, fourth, fifth, sixth, seventh, and/or eighth aspects), the secure resource agent is configured to manage the execution of tasks within a virtual private cloud.

To this end, in some optional aspects, one or more of the foregoing features of the aforementioned apparatus, system, and/or method may afford a centralized resource manager that, in turn, may enable the efficient allocation of resources within a cloud. It should be noted that the aforementioned potential advantages are set forth for illustrative purposes only and should not be construed as limiting in any manner.

### BRIEF DESCRIPTION OF THE DRAWINGS

Figures **1A** and **1B** illustrate the infrastructure for implementing a cloud, in accordance with the prior art;
Figure **2** is a conceptual illustration of a cloud architecture, in accordance with the prior art;
Figure **3** is a conceptual illustration of a cloud architecture, in accordance with one embodiment;
Figures **4A** through **4C** illustrate a technique for allocating resources in the cloud by the resource manager, in accordance with one embodiment;
Figures **5** is a flowchart of a method for managing the allocation of resources in a cloud, in accordance with one embodiment;
Figures **6** is a flowchart of a method for managing the allocation of resources in a cloud, in accordance with one embodiment;
Figures **7** is a flowchart of a method for managing the execution of tasks by a service, in accordance with one embodiment;
Figure **8** is a conceptual illustration of a cloud architecture, in accordance with one embodiment;
Figure **9** illustrates the communications between a secure resource agent, in accordance with one embodiment;
Figures **10** is a flowchart of a method for managing the allocation of resources in a cloud, in accordance with one embodiment;
Figures **11** is a flowchart of a method for authenticating an authorized tenant associated with a virtual private cloud, in accordance with one embodiment; and
Figure **12** illustrates an exemplary system in which the various architecture and/or functionality of the various previous embodiments may be implemented.

### DETAILED DESCRIPTION

Conventionally, resource allocation in a cloud architecture has been implemented based on a resource dependence scheme, where each resource manager in the cloud requests resources from a parent resource manager. In the conventional cloud architecture, many hundreds or thousands of resource managers may be implemented as hundreds or thousands of services are deployed within the cloud. This large network of dependent resource managers are not designed to communicate and, therefore, the allocation of resources among this multi-layered network of resource managers is not likely to be efficient.

One possible solution to the resource allocation problem is to transition from a distributed, multi-layered resource dependence scheme to a physically distributed, logically centralized resource allocation scheme. In this scheme, each resource manager deployed in the cloud is an agent that is dependent on a unified resource manager. The unified resource manager is tasked with allocating resource units among the plurality of resource agents, enabling the unified resource manager to efficiently distribute resource units among all of the services deployed within the cloud.

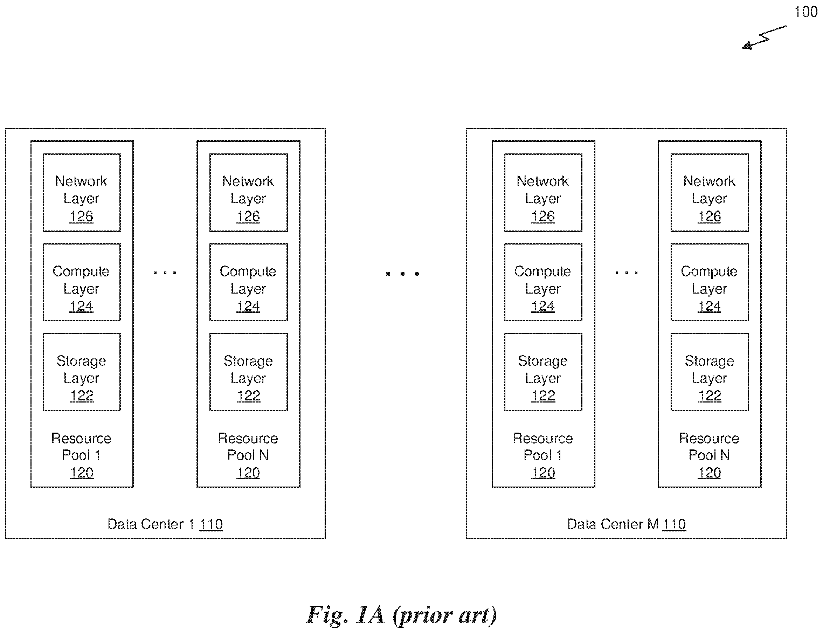

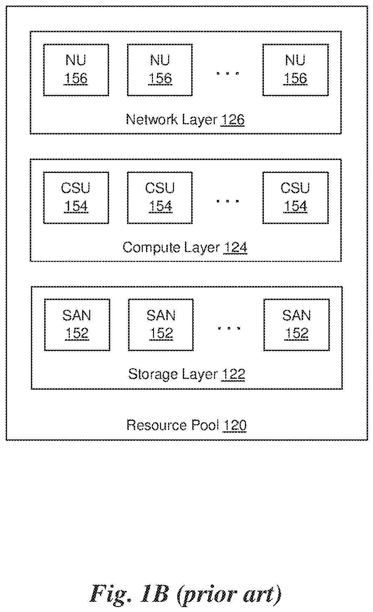

Figures **1A** and **1B** illustrate the infrastructure for implementing a cloud **100**, in accordance with the prior art. The cloud **100**, as used herein, refers to the set of hardware resources (compute, storage, and networking) located in one or more data centers (i.e., physical locations) and the software framework to implement a set of services across a network, such as the Internet. As shown in Figure **1A**, the cloud **100** includes a plurality of data centers **110**, each data center **110** in the plurality of data centers **110** including one or more resource pools **120**. A resource pool **120** includes a storage layer **122**, a compute layer **124**, and a network layer **126**.

As shown in Figure **1B**, the storage layer **122** includes the physical resources to store instructions and/or data in the cloud **100**. The storage layer **122** includes a plurality of storage area networks (SAN) **152**, each SAN **152** provides access to one or more block level storage devices. In one embodiment, a SAN **152** includes one or more non-volatile storage devices accessible via the network. Examples of non-volatile storage devices include, but are not limited to, hard disk drives (HDD), solid state drives (SSD), flash memory such as an EEPROM or Compact Flash (CF) Card, and the like. In another embodiment, a SAN **152** is a RAID (Redundant Array of Independent Disks) storage array that combines multiple, physical disk drive components (e.g., a number of similar HDDs) into a single logical storage unit. In yet another embodiment, a SAN **152** is a virtual storage resource that provides a level of abstraction to the physical storage resources such that a virtual block address may be used to reference data stored in one or more corresponding blocks of memory on one or more physical non-volatile storage devices. In such an embodiment, the storage layer **122** may include a software framework, executed on one or more processors, for implementing the virtual storage resources.

The compute layer **124** includes the physical resources to execute processes (i.e., sets of instructions) in the cloud **100**. The compute layer **124** may include a plurality of compute scale units (CSU) **154**, each CSU **154** including at least one processor and a software framework for utilizing the at least one processor. In one embodiment, a CSU **154** includes one or more servers (e.g., blade servers) that provide physical hardware to execute sets of instructions. Each server may include one or more processors (e.g., CPU(s), GPU(s), ASIC(s), FPGA(s), DSP(s), etc.) as well as volatile memory for storing instructions and/or data to be processed by the one or more processors. The CSU **154** may also include an operating system, loaded into the volatile memory and executed by the one or more processors, that provides a runtime environment for various processes to be executed on the hardware resources of the server. In another embodiment, a CSU **154** is a virtual machine that provides a collection of virtual resources that emulate the hardware resources of a server. The compute layer **124** may include a hypervisor or virtual machine monitor that enables a number of virtual machines to be executed substantially concurrently on a single server.

The networking layer **126** includes the physical resources to implement networks. In one embodiment, the networking layer **126** includes a number of switches and/or routers that enable data to be communicated between the different resources in the cloud **100**. For example, each server in the compute layer **124** may include a network interface controller (NIC) coupled to a network interface (e.g., Ethernet). The interface may be coupled to a network switch that enables data to be sent from that server to another server connected to the network switch. The networking layer **126** may implement a number of layers of the OSI model, including the Data Link layer (i.e., layer 2), the Networking layer (i.e., layer 3), and the Transport layer (i.e., layer 4). In one embodiment, the networking layer **126** implements a virtualization layer that enables virtual networks to be established within the physical network. In such embodiments, each network unit (NU) **156** in the network layer **126** is a virtual private network (VPN).

It will be appreciated that each data center **110** in the plurality of data centers may include a different set of hardware resources and, therefore, a different number of resource pools **120**. Furthermore, some resource pools **120** may exclude one or more of the storage layer **122**, compute layer **124**, and/or network layer **126**. For example, one resource pool **120** may include only a set of servers within the compute layer **124**. Another resource pool **120** may include both a compute layer **124** and network layer **126**, but no storage layer **122**.

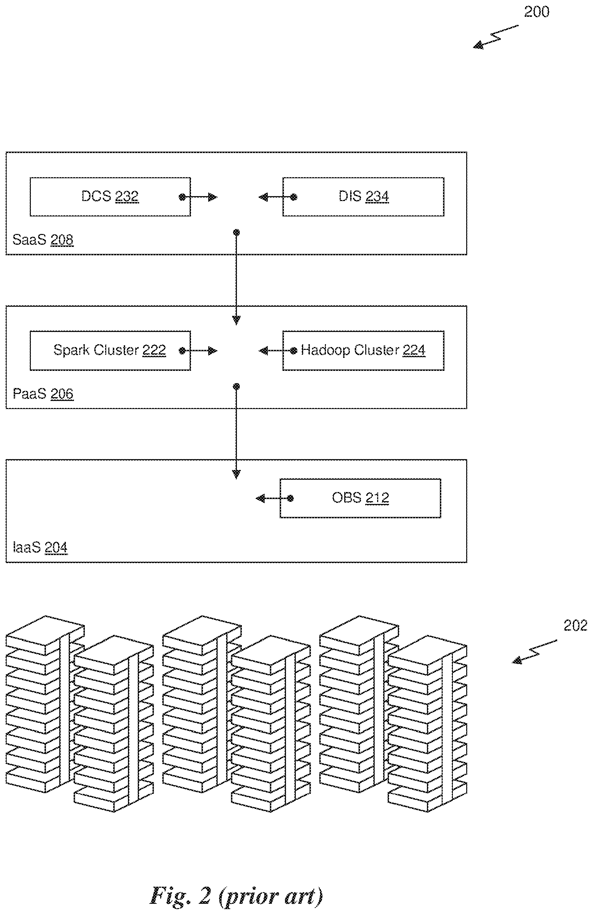

Figure 2 is a conceptual illustration of a cloud architecture **200**, in accordance with the prior art. As shown in Figure **2**, the cloud architecture **200** is represented as a plurality of hierarchical layers. The cloud architecture **200** includes a physical layer **202**, an Infrastructure as a Service (IaaS) layer **204**, a Platform as a Service (PaaS) layer **206**, and a Software as a Service (SaaS) layer **208**. The physical layer **202** is the collection of hardware resources that implement the cloud. In one embodiment, the physical layer **202** is implemented as shown in Figures **1A** and **1B**.

The IaaS layer **204** is a software framework that enables the resources of the physical layer **202** to be allocated to different infrastructure services. In one embodiment, the IaaS layer **204** includes a resource manager for allocating resource units (e.g., SAN **152**, CSU **154**, and NU **156**) in the resource pools **120** of the physical layer **202** to services implemented within the IaaS layer **204**. As shown in Figure **2**, services such as an Object Storage Service (OBS) **212** may be implemented in the IaaS layer **204**. The OBS **212** is a cloud storage service for unstructured or structured data that enables a client to store data in the storage layer **122** of one or more resource pools **120** in the physical layer **202**. The OBS **212** may manage where data is stored (i.e., in what data center(s), on which physical drives, etc.) and how data is stored (i.e., n-way replicated data, etc.).

Each service in the IaaS layer **204** may include a separate resource manager that manages the resources allocated to the service. As shown in Figure **2**, black dots within a particular service denote a resource manager for that service and arrows represent a request for resources made by the resource manager of the service to a parent resource manager. In the case of the OBS **212**, a resource manager within the OBS **212** requests resources from the resource manager of the IaaS layer **204**. Again, the resource manager of the IaaS layer **204** manages the resources from the physical layer **202**.

The OBS **212** is only one example of a service implemented within the IaaS layer **204**, and the IaaS layer **204** may include other services in addition to or in lieu of the OBS **212**. Furthermore, the IaaS layer **204** may include multiple instance of the same service, such as multiple instances of the OBS **212**, each instance having a different client facing interface, such that different services may be provisioned for multiple tenants.

The next layer in the hierarchy is the PaaS layer **206**. The PaaS layer **206** provides a framework for implementing one or more platform services. For example, as shown in Figure **2**, the PaaS layer **206** may include instances of a Spark Cluster service **222** and a Hadoop Cluster service **224**. The Spark Cluster service **222** implements an instance of the Apache^{™} Spark^{®} platform, which includes a software library for processing data on a distributed system. The Hadoop Cluster service **224** implements an instance of the Apache^{™} Hadoop^{®} platform, which also includes a software library for processing data on a distributed system. Again, the Spark Cluster service **222** and the Hadoop Cluster service **224** are merely examples of platform services implemented within the PaaS layer **206**, and the PaaS layer **206** may include other services in addition to or in lieu of the Spark Cluster service **222** and the Hadoop Cluster service **224**.

The platform services in the PaaS layer **206**, such as the Spark Cluster service **222** and the Hadoop Cluster service **224**, each include an instance of a resource manager. The Spark Cluster service **222** and the Hadoop Cluster service **224** may both utilize the Apache YARN resource manager. These resource managers may request resources from a parent resource manager of the PaaS layer **206**. The resource manager of the PaaS layer **206** manages the resources from the IaaS layer **204** allocated to the PaaS layer **206** by the resource manager in the IaaS layer **204**.

The top layer in the hierarchy is the SaaS layer **208.** The SaaS layer **208** may provide a framework for implementing one or more software services. For example, as shown in Figure **2**, the SaaS layer **208** may include instances of a Data Craft Service (DCS) service **232** and a Data Ingestion Service (DIS) service **234**. The DCS service **232** implements an application for processing data, such as transferring or transforming data. The DIS service **234** implements an application for ingesting data, such as collecting data from a variety of different sources and in a variety of different formats and processing the data to be stored in one or more different formats. Again, the DCS service **232** and the DIS service **234** are merely examples of application services implemented within the SaaS layer **208**, and the SaaS layer **208** may include other services in addition to or in lieu of the DCS service **232** and the DIS service **234**.

The DCS service **232** and the DIS service **234** each include an instance of a resource manager. These resource managers may request resources from a parent resource manager of the SaaS layer **208**. The resource manager of the SaaS layer **208** manages the resources allocated to the SaaS layer **208** by the resource manager of the PaaS layer **206**.

It will be appreciated that each resource manager in the cloud architecture **200** is associated with a corresponding parent resource manager from which resource units are requested, which may be referred to herein as resource dependence. There may be exceptions to the arrows depicting resource dependence as shown in Figure **2** when the resource dependence spans layers, such as if the Spark Cluster service **222** may request resources directly from the resource manager of the IaaS layer **204** rather than from the resource manager of the PaaS layer **206**. However, in such resource dependence schemes, no single resource manager has visibility into each and every resource unit deployed in the cloud. Thus, no single resource manager can effectively manage the allocation of resource units between different services based on the utilization of each resource unit in the cloud.

It will be appreciated that the cloud architecture **200** shown in Figure **2** is only one type of architecture framework implemented in conventional clouds. However, other cloud architectures may implement different frameworks. For example, a cloud architecture may include the IaaS layer **204** and the SaaS layer **208** without any intervening PaaS layer **206**. In another example, a cloud architecture may include a Container as a Service (CaaS) layer (i.e., a new way of resource virtualization without IaaS and PaaS) plus an SaaS layer on top of the CaaS layer. In each instance, these cloud architectures employ a resource dependence scheme for requesting resources on which to run the service.

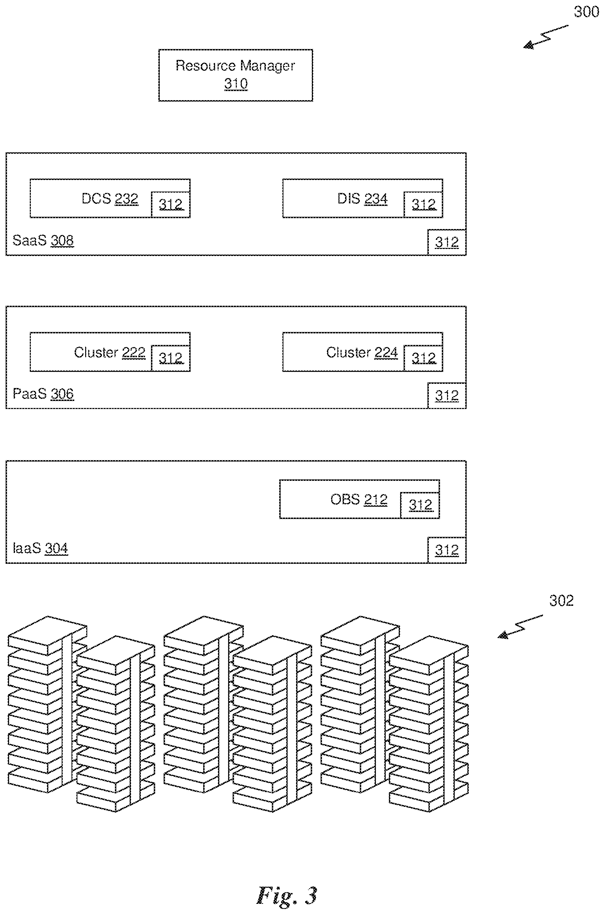

Figure **3** is a conceptual illustration of a cloud architecture **300**, in accordance with one embodiment. As shown in Figure **3**, the cloud architecture **300** is represented as a plurality of hierarchical layers, similar to the cloud architecture **200** shown in Figure **2**. The hierarchical layers may include a physical layer **302**, an IaaS layer **304**, a PaaS layer **306**, and a SaaS layer **308**. The IaaS layer **304** may include instances of various infrastructure services, such as the OBS **212**; the PaaS layer **306** may include instances of various platform services, such as the Spark Cluster service **222** and the Hadoop Cluster service **224**; and the SaaS layer **308** may include instances of various application services, such as the DCS service **232** and the DIS service **234**. Again, the types or number of services implemented in each layer may vary according to a particular deployment of services in the cloud.

The cloud architecture **300** shown in Figure **3** differs from the cloud architecture **200** shown in Figure **2** in that the scheme utilized for resource allocation is not based on resource dependence. Instead, the cloud architecture **300** shown in Figure **3** includes a unified resource manager **310** that allocates resource units to each layer or service deployed in the cloud. Each layer in the cloud includes a resource agent **312**. In one embodiment, the resource agent **312** is a software module configured to manage the resources allocated to that resource agent **312**. The resource agent **312** may request resource units from the resource manager **310** to be allocated to the resource agent **312**. The resource manager **310** can allocate resource units independently to each layer of the cloud, and has visibility into the resource requirements of each layer of the cloud based on the requests received from each of the resource agents **302**.

Each service may also include a resource agent **312**. The resource agent **312** in each service requests resource units from the resource manager **310**. Consequently, every resource agent **312** deployed in the cloud is dependent on the unified resource manager **310** such that the resource manager **310** can allocate resource units more efficiently within the cloud.

As used herein, a resource unit may refer to any logical unit of a resource. In the case of the physical layer **302**, each resource unit may refer, e.g., to a SAN **152**, a CSU **154**, or a NU **156**. These resource units can be allocated throughout the layers of the cloud. However, each layer and/or service may also define additional resource units that refer to virtual resources implemented by that layer or service. For example, the Spark Cluster service **222** may implement one or more Spark Clusters by grouping, logically, one or more resource units allocated to the Spark Cluster service **222** along with a framework for utilizing those resource units. Consequently, other services, such as services in the SaaS layer **308**, may request the allocation of a Spark Cluster rather than the hardware resource units of the physical layer **302**. In this case, a resource unit may refer to a Spark Cluster.

In one embodiment, the resource manager **310** may track the resources available in the cloud. The resource manager **310** may discover each of the resource units included in the physical layer **302** such as by polling each node in the cloud to report what resource units are included in the node. Alternatively, the resource manager **310** may read a configuration file, maintained by a network administrator that identifies the resource units included in the physical layer **302** of the cloud. In addition, each layer and/or service deployed within the cloud may stream resource information to the resource manager **310** that specifies any additional resource units implemented by those layers and/or services. The resource manager **310** is then tasked with allocating these resource units to other layers and/or services in the cloud.

In one embodiment, the resource manager **310** is executed on a node within the cloud architecture. More specifically, the resource manger **310** may be loaded on a server and executed by a processor on the server. The resource manager **310** may be coupled to other servers via network resources in the physical layer **302**. Resource agents **302** executing on different servers may request resource units from the resource manger **310** by transmitting the request to the resource manager **310** via the network. In such an embodiment, a single instance of the resource manager **310** manages all of the resource units in the cloud.

In one embodiment, the resource manager **310** is a physically distributed, but logically centralized cloud plane. More specifically, a plurality of instances of the resource manager **310** may be loaded onto a plurality of different servers such that any resource agent **312** deployed in the cloud may request resource units from any instance of the resource manger **310** by transmitting the request to one instance of the resource manager **310** via the network. The multiple instances of the resource manager **310** may be configured to communicate such that resource allocation is planned globally be all instances of the resource manager **310**. For example, one instance of the resource manager **310** may be loaded onto a single server in each data center **110** to provide high availability of the resource manager **310**. In another example, one instance of the resource manager **310** may be loaded onto a single server in each availability zone of a plurality of availability zones. Each availability zone may comprise a number of data centers, such that all data centers in a particular geographic area are served by one instance of the resource manager **310**.

The plurality of resource agents **302** may include a variety of resource agent types. Each resource agent **312** includes logic to implement a variety of functions specific to the type of layer or service associated with the resource agent **312**. In one embodiment, a resource agent **312** is a stand-alone module designed with specific functionality for a particular layer or service. In another embodiment, a resource agent **312** is a container that wraps an existing resource manager of a service. For example, a service that was written for an existing cloud architecture may be modified to include a resource agent **312** that wraps the resource manager implemented in the service of the existing cloud architecture. The container may utilize the logic of the previous resource manager for certain tasks while making the resource manager compatible with the unified resource manager **310**. In yet another embodiment, the resource agent **312** is a lightweight client, referred to herein as a resource agent fleet (RAF), such that only a basic amount of logic is included in the resource agent **312** and more complex logic is assumed to be implemented, if needed, by the resource manager **310**. RAF resource agents **302** may be deployed in some SaaS services. A RAF resource agent **312** may be a simple software module that can be used for a variety of services and only provides the minimum level of functionality to make the service compatible with the unified resource manager **310**.

The resource manager **310** collects information related to the resource units deployed in the cloud and develops a resource allocation plan allocating the resource units to the layers and/or services deployed in the cloud. A resource allocation plan can be optimized by customizing the allocation of resource units based on different services and applications. However, as the number of services grows, the ability for simple logic implemented within the resource manager **310** to efficiently allocate resource units to the various services becomes more difficult. In such cases, logic to assist in determining how many resource units should be allocated to a particular service based on a specific request for resource units may be implemented external to the resource manager **310** and utilized by the resource manager **310** when developing or adjusting the resource allocation plan.

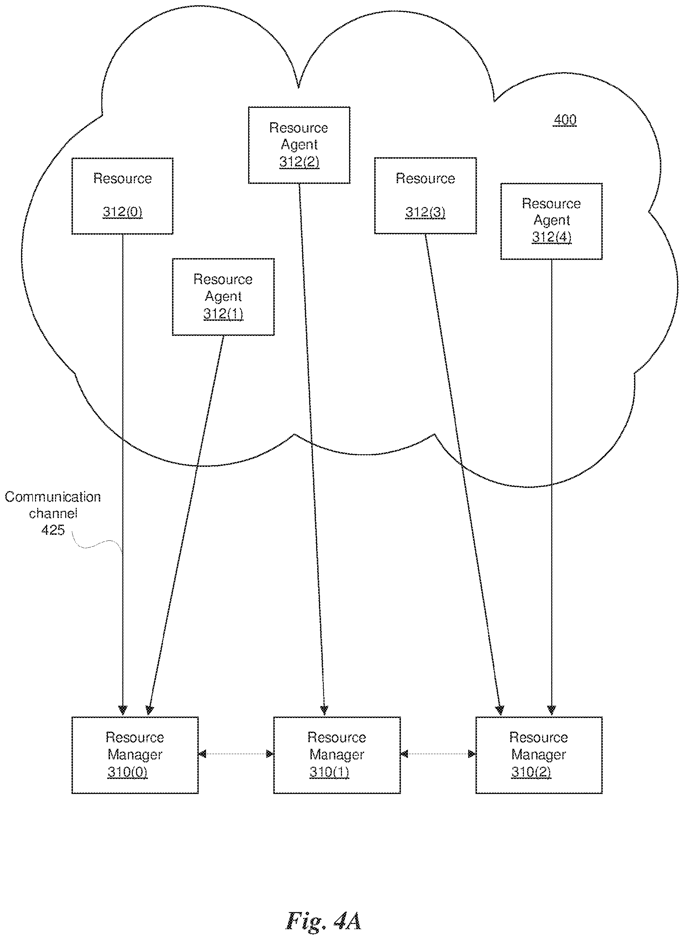

Figures **4A** through **4C** illustrate a technique for allocating resources in the cloud **400** by the resource manager **310**, in accordance with one embodiment. Again, the resource manager **310** may be deployed as a physically distributed, but logically centralized cloud plane including a number of instances of the resource manager **310** deployed in different data centers or availability zones of the cloud **400.** As shown in Figure **4A**, such a deployment may include a first instance of the resource manager **310(0)**, a second instance of the resource manager **310(1)**, and a third instance of the resource manager **310(2)** executed on three different nodes in the cloud. Of course, in different embodiments, the number of instances of the resource manager **310** deployed in the cloud may be more than or less than three, including a single instance of the resource manager only located on a single node in the cloud.

The cloud **400** includes a plurality of nodes in one or more data centers, each node in the plurality of nodes in communication with at least one other node in the plurality of nodes through one or more networks. The cloud **400** may also include a plurality of storage devices, each storage device in the plurality of storage devices coupled to a node in the plurality of nodes. The cloud **400** may include a number of layers and/or services deployed therein, each layer and/or service including an instance of a resource agent **312.** Each resource agent **312** is configured to manage the execution of tasks using the number of resource units allocated to the resource agent. However, in order to execute tasks, the resource agents **312** are dependent on the resource manager **310** to allocate resource units to the resource agents **312** for executing those tasks. Each resource agent **312** opens a communication channel **425** between the resource agent **312** and one instance of the resource manager **310.** As shown in Figure **4A**, a first resource agent **312(0)** and a second resource agent **312(1)** open a communication channel **425** with the first instance of the resource manager **310(0)**; a third resource agent **312(2)** opens a communication channel **425** with the second instance of the resource manager **310(1)**; and a fourth resource agent **312(3)** and a fifth resource agent **312(4)** open a communication channel **425** with a third instance of the resource manager **310(2)**. The particular instance of the resource manager **310** that a particular resource agent **312** opens a channel of communication between may depend on a location of the resource agent **312** and the locations of the plurality of instances of the resource manager **310**. For example, a resource agent **312** may ping each instance of the resource manager **310**, where the location in the network of each instance of the resource manager **310** is stored in a configuration file, and measure the response time associated with each instance of the resource manager **310**. The resource agent **312** may then open a communication channel **425** with the instance of the resource manager **310** corresponding to the fastest response time.

Once the communication channels **425** are opened, each resource agent **312** is configured to stream data to a corresponding instance of the resource manager **310**. In one embodiment, each resource agent **312** streams profile data to the resource manager **310**. The profile data includes a resource type identifier, resource utilization information, and a task execution plan. The resource type identifier may identify a type of the resource units managed by the resource agent **312**. In other words, the resource type identifier may indicate to the resource manager **310** that resource units of the type specified in the resource type identifier are managed by the resource agent **312** and may be allocated to other resource agents **312** by the resource manager **310**. The resource utilization information indicates a number of available resource units managed by the resource agent **312**. The resource utilization information may also indicate how many resource units are unavailable (i.e., allocated and not released). For example, the resource agent **312** for a cluster service may indicate how many clusters are managed by the resource agent **312** and a number of clusters that are available to be allocated to a task. The task execution plan indicates a number of tasks managed by the resource agent **312**. The task execution play may also indicate an order or priority of the tasks managed by the resource agent **312**, information related to a manner for executing the tasks, and/or information related to a number or type of resource units needed to execute the tasks.

Each instance of the resource manager **310** stores the streamed data received from the plurality of resource agents **312** in a memory accessible to each of the other instances of the resource manager **310**. In one embodiment, a distributed database is created for storing the streamed profile data. The distributed database may be stored on a plurality of storage devices within the cloud to ensure high availability of the streamed profile data to the instance of the resource manager **310**.

The resource manager **310** is tasked with generating a resource allocation plan. The resource allocation plan refers to the allocation of resource units to the plurality of resource agents **312**. In one embodiment, the resource allocation plan maps available resource units allocated to each particular resource agent **312** in the plurality of resource agents. Each resource agent **312** in the plurality of resource agents is configured to manage the execution of tasks using the number of resource units allocated to the resource agent **312** in the resource allocation plan. For example, a resource agent **312** for a service in the SaaS layer may be allocated a cluster resource unit in the PaaS layer in the resource allocation plan. Consequently, the resource agent **312** for the service in the SaaS layer may then manage the execution of a task using the allocated cluster resource unit. In one embodiment, the resource manager **310** is configured to allocate resource units to each resource agent **312** in a first-come, first-served basis as resource units are available. However, when the number of available resource units falls below a threshold value, the resource manager **310** adjusts the allocation of resource units based on an algorithm. In one embodiment, the resource manager **310** utilizes a machine-learning algorithm to assist with allocation of resource units. In another embodiment, the resource manager **310** utilizes a priority value assigned to each resource agent **312** or individual tasks managed by each resource agent **312** in order to assist with the allocation of resource units. It will be appreciated that a large number of different algorithms can be implemented by the resource manager **310** in order to allocate resource units among the plurality of resource agents **312**. When a task is complete, the resource agent **312** managing the execution of the task may notify the resource manager **310**, and the resource manager **310** may update the resource allocation plan to deallocate resource units from the resource agent **312**.

In one embodiment, one instance of the resource manager **310** is configured as a master instance of the resource manager **310**. The master instance of the resource manager **310** implements the algorithm for generating the resource allocation plan. The other instances of the resource manager **310** are slave instances of the resource manager **310**, which simply collect the streamed data from the plurality of resource agents **312** and store the streamed data in the distributed database to be accessed by the master instance of the resource manager **310**. Consequently, the logic for allocating resource units to the plurality of resource agents **312** is centralized and controlled by the single instance of the resource manager **310**.

In another embodiment, all instances of the resource manager **310** share the task of implementing the algorithm for generating the resource allocation plan. For example, the plurality of resource agents **312** and set of available resource units may be mapped to the plurality of instances of the resource manager **310**, and then each instance of the resource manager **310** implements the algorithm for allocating a subset of available resource units among a subset of the plurality of resource agents **312**. Thus, each instance of the resource manager **310** generates a portion of the resource allocation plan, and the portions of the resource allocation plan are then combined to form the complete resource allocation plan.

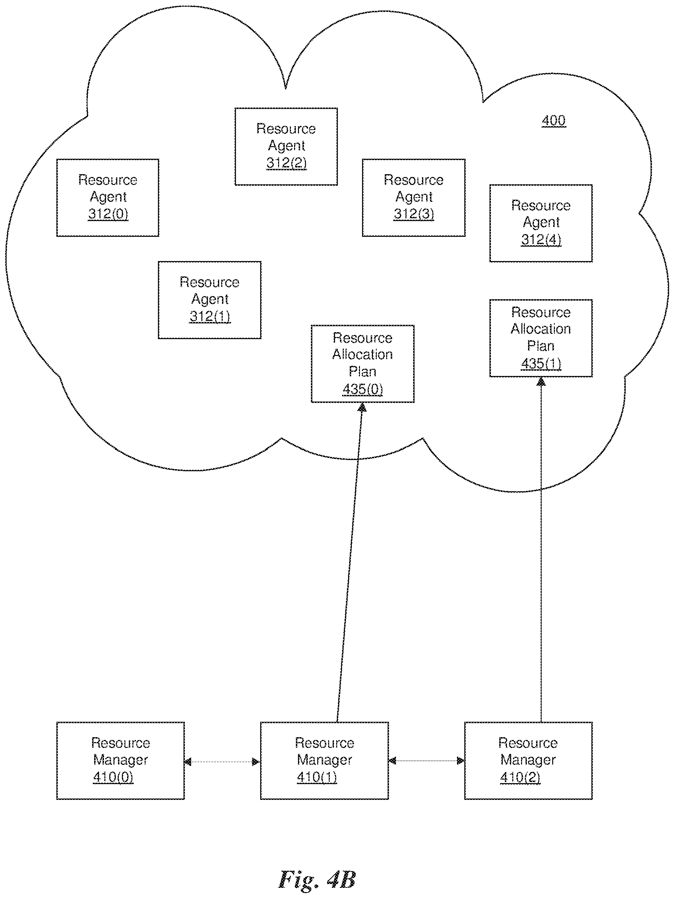

The resource manager **310** may then store the resource allocation plan **435** in the cloud **400**. At least one instance of the resource manager **310** is configured to store a copy of the resource allocation plan **435** in the cloud. For example, as shown in Figure **4B**, the second instance of the resource manager **310(1)** stores a first instance of the resource allocation plan **435(0)** in the cloud, and a third instance of the resource manager **310(2)** stores a second instance of the resource allocation plan **435(1)** in the cloud.

In one embodiment, multiple instances of the resource allocation plan **435** are stored in the cloud **400**, such as by storing instances of the resource allocation plan **435** in multiple data centers to ensure high availability of the resource allocation plan **435** to be accessed by the plurality of resource agents **302**. In another embodiment, the resource allocation plan is stored in a distributed file system, such as the Hadoop Distributed File System, as deployed as a service in the cloud **400**. The distributed file system may be configured to store multiple redundant copies of the resource allocation plan **435** on a plurality of storage devices.

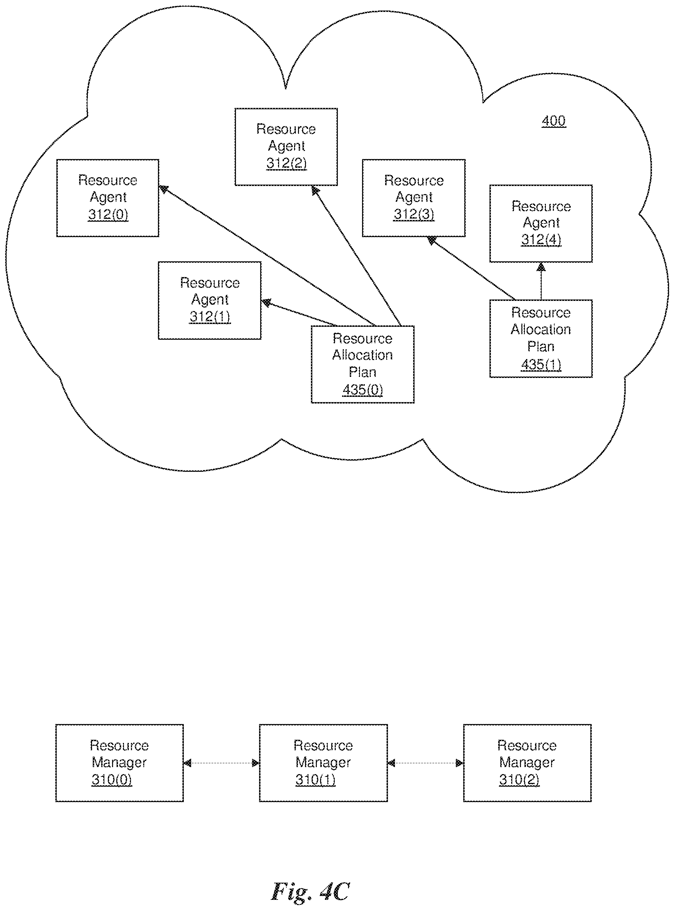

Each resource agent **312** is then directed to a location of one instance of the resource allocation plan **435** stored in the cloud. As shown in Figure **4C**, the first resource agent **312(0)**, the second resource agent **312(1)**, and the third resource agent **312(2)** are directed to the location of the first instance of the resource allocation plan **435(0)**, and the fourth resource agent **312(3)** and the fifth resource agent **312(4)** are directed to the location of the second instance of the resource allocation plan **435(1)**. The resource manager **310** may send the location to each resource agent via the communication channel **425**. Each resource agent **312** may then read the corresponding instance of the resource allocation plan **435** to determine which resource units have been allocated to that resource agent **312** by the resource manager **310**.

It will be appreciated that transmitting the location of the resource allocation plan to each resource agent **312** may be simpler to implement within the resource manager **310** than transmitting specific resource unit allocation information to each resource agent **312** individually. The number of instances of the resource allocation plan **435** to store in the cloud **400** may be increased or decreased dynamically based on the number of resource agents **302** deployed in the cloud. The larger the number of resource agents **302**, the more instances of the resource allocation plan **435** that may need to be stored in the cloud **400** to ensure that large numbers of resource agents **302** are able to access the data when needed.

In one embodiment, the resource agents **302** are configured to continuously stream data to the instances of the resource manager **310** to update the profile information. For example, as new tasks are initiated within a service, the corresponding resource agent **312** may notify a corresponding instance of a resource manager **310** of a change in the profile data for the resource agent **312**. The new task may require additional resource units to be allocated to the resource agent **312**. Similarly, when tasks are completed, the resource agent **312** may stream new profile data to the corresponding instance of the resource manager **310** that enables the resource manager **310** to release some resource units previously allocated to the resource agent **312**. The resource manager **310** may adjust the allocation of resource units by modifying the resource allocation plan **435** in the cloud. Resource agents **302** may be configured to poll the resource allocation plan **435** periodically to check for new resource units allocated to the resource agent **312** or to release resource units no longer needed by the resource agent **312**.

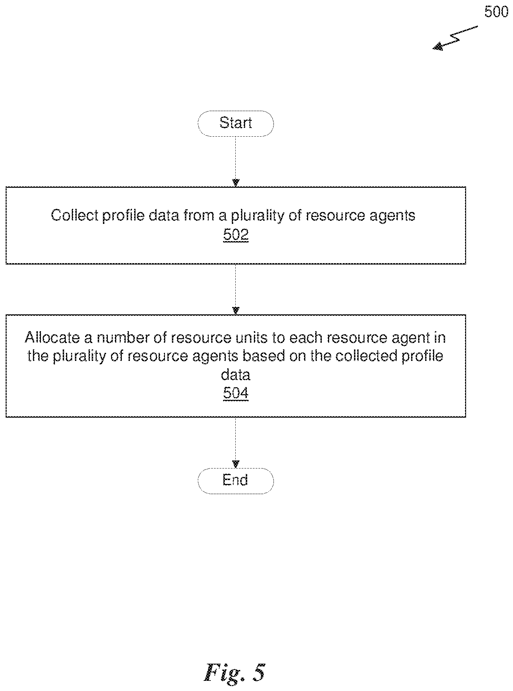

Figures **5** is a flowchart of a method **500** for managing the allocation of resources in a cloud, in accordance with one embodiment. The method **500** may be performed by hardware, software, or a combination of hardware and software. In one embodiment, the method **500** is implemented by the resource manager **310** executed on one or more nodes of the cloud.

At step **502**, profile data is collected from a plurality of resource agents **302**. In one embodiment, the plurality of resource agents **302** are deployed in a cloud, with each resource agent **312** in the plurality of resource agents **302** associated with a layer or service in the cloud. Each resource agent **312** streams profile data corresponding to that resource agent **312** to an instance of a resource manager **310**. The profile data may include, but is not limited to, a resource type identifier, resource utilization information, and/or a task execution plan.

At step **504**, a number of resource units are allocated to each resource agent **312** in the plurality of resource agents **302** based on the collected profile data. In one embodiment, a resource manager **310** is configured to generate a resource allocation plan **435** utilizing the collected profile data. For example, a number of tasks managed by each resource agent **312** may be utilized to calculate a number of resource units to allocate to the resource agent **312**. Complicated algorithms, including machine-learning algorithms, may be implemented by the resource manager **310** to generate the resource allocation plan **435** utilizing the collected profile data from all of the resource agents **312** deployed in the cloud. Each resource agent **312** may be configured to read the resource allocation plan **435** to determine which resource units have been allocated to the resource agent **312** by the resource manager **310**.

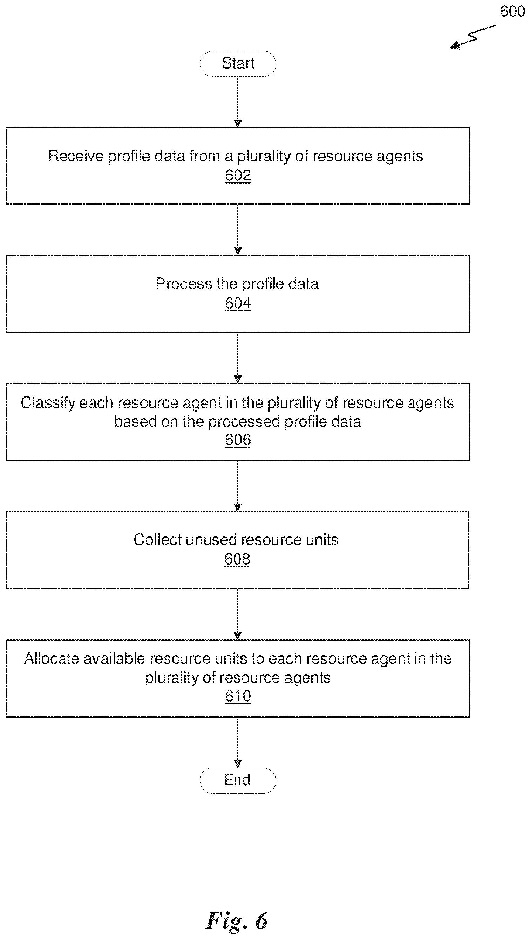

Figures **6** is a flowchart of a method **600** for managing the allocation of resources in a cloud, in accordance with one embodiment. The method **600** may be performed by hardware, software, or a combination of hardware and software. In one embodiment, the method **600** is implemented by the resource manager **310** executed on one or more nodes of the cloud.

At step **602**, profile data is received from a plurality of resource agents **312**. In one embodiment, the profile data is received by one of a plurality of instances of a resource manager **310** and stored in a distributed database accessible to each instance of the resource manager **310**. At step **604**, the profile data is processed. In one embodiment, at least one instance of the resource manager **310** processes the profile data collected from the plurality of resource agents **302**. For example, the resource manager **310** may calculate a total number of resource units available within the cloud, or the resource manager **310** may calculate a total number of tasks managed by each resource agent **312** by counting the number of tasks enumerated in the profile data from each resource agent **312**.

At step **606**, each resource agent **312** in the plurality of resource agents **312** is classified based on the processed profile data. In one embodiment, the classification can indicate a priority of the resource agent **312** for allocation purposes. At step **608**, unused resource units are collected. In one embodiment, the resource manager **310** is configured to compare the number of resource units currently allocated to a resource agent **312** with the number of tasks managed by the resource agent **312**. If the number of resource units allocated to the resource agent **312** exceeds the number of resource units necessary to execute the number of tasks managed by the resource agent **312**, then the resource manager **310** may release at least some of the resource units allocated to the resource agent **312** to allow those resource units to be allocated to different resource agents **312**. The resource manager **310** may track how many resource units are currently allocated to various resource agents **312** and how many resource units are available to be allocated to resource agents **312**.

At step **610**, available resource units are allocated to each resource agent **312** in the plurality of resource agents **312**. In one embodiment, the resource manager **310** updates the resource allocation plan **435** to indicate a number of resource units allocated to each resource agent **312**. The resource manager **310** may be configured with a number of algorithms for determining how to allocate resources among the plurality of resource agents **312**. Types of algorithms include, but are not limited to, first-come, first-served algorithms, priority-based algorithms, and machine-learning algorithms based on resource utilization statistics.

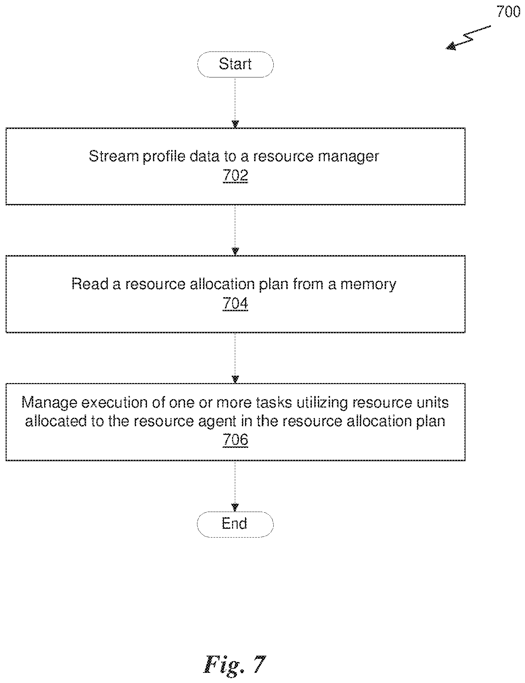

Figures **7** is a flowchart of a method **700** for managing the execution of tasks by a service, in accordance with one embodiment. The method **700** may be performed by hardware, software, or a combination of hardware and software. In one embodiment, the method **700** is implemented by a resource agent **312** executed on one or more nodes of the cloud.

At step **702**, profile data is streamed to a resource manager **310**. In one embodiment, a resource agent **312** is configured to generate a data structure in a memory to store profile data. The profile data may include information related to resource units made available by a layer or service associated with the resource agent **312**, a number of tasks currently managed by the resource agent **312**, and the like. The profile data may also include a request for resource units to be allocated to the resource agent **312**. The data structure may then be streamed to an instance of the resource manager **310** via a communication channel **425**.

At step **704**, a resource allocation plan **435** is read from a memory. In one embodiment, the resource agent **312** receives a location of the resource allocation plan **435** from the resource manager **310**, and reads allocation information that indicates a number of resource units allocated to the resource agent **312** from the resource allocation plan **435** in the memory.

At step **706**, execution of one or more tasks is managed utilizing resource units allocated to the resource agent **312** in the resource allocation plan **435**. In one embodiment, the resource agent **312** may utilize resource units allocated to the resource agent **312** for executing tasks managed by the resource agent **312**. For example, a CSU **154** allocated to the resource agent **312** may be utilized to process data for the task or execute a set of instructions to perform a particular function. In another example, a cluster allocated to the resource agent **312** may be utilized to execute a task using the tools implemented by the cluster.

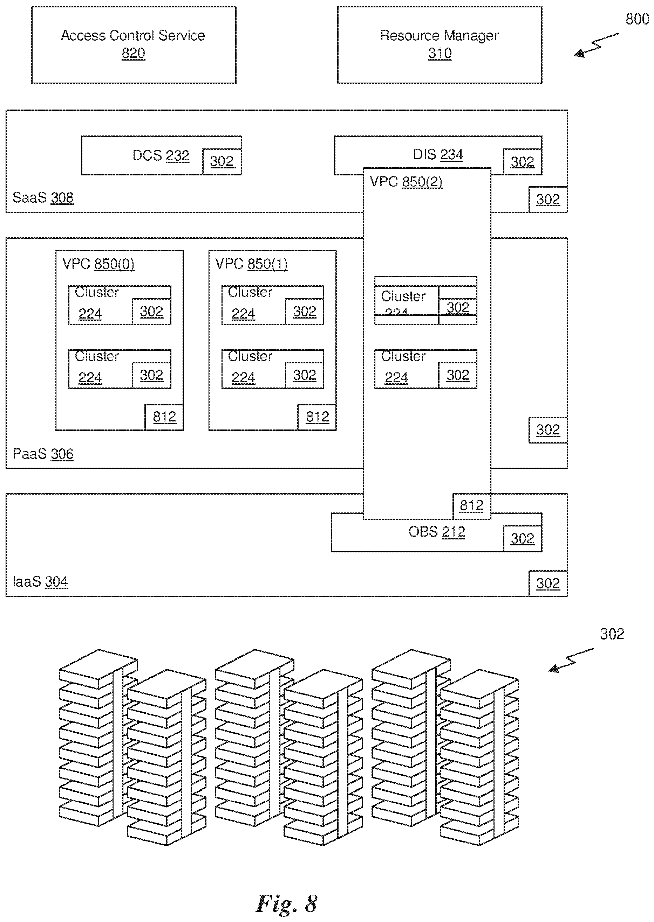

Figure 8 is a conceptual illustration of a cloud architecture **800**, in accordance with one embodiment. As shown in Figure **8**, the cloud architecture **800** is represented as a plurality of hierarchical layers, similar to the cloud architecture **200** shown in Figure **2** and the cloud architecture **300** shown in Figure **3**. The cloud architecture **800** may include a number of services in the different hierarchical layers (e.g., layers **304**, **306**, **308**), such as the DCS service **232** and the DIS service **234** in the SaaS layer **206**. Each hierarchical layer and service may each include a resource agent **312** that is in communication with a resource manager **310**.

The cloud architecture **800** also includes provisions for virtual private clouds (VPCs) **850**. A VPC **850** is a set of resources/services allocated to a particular client, such as a business customer. A number of users for the client may be granted access to the VPC **850** to perform tasks using the resources/services included in the VPC **850**. As shown in Figure 8, a VPC **850** may include resources/services in a particular layer of the cloud (e.g., VPC **850(0)** and VPC **850(1)**) or the VPC **850** may include resources/services across multiple layers of the cloud (e.g., VPC **850(2)**). It will be appreciated that the resources and/or services allocated within a VPC 850 may be assigned to a particular client and, therefore, access to the VPC **850** should be restricted to users authorized by the client.

In one embodiment, each VPC **850** may include a secure resource agent (SRA) **812**, which is similar to a resource agent **312**, described above, but also includes an additional functionality of authentication and encryption. When a VPC **850** is provisioned, the SRA **812** establishes an encrypted channel of communication between the resource manager **310** and the SRA **812**. The SRA **812** is configured to stream profile data to the resource manager **310** in order for the resource manager **310** to allocate resources to the VPC **850**. The SRA **812** also establishes a channel of communication with any resource manager **312** implemented within a service included in the VPC **850.** The resource agents **312** implemented within a service of the VPC **850** are configured to stream profile data to the SRA **812,** which aggregates the profile data for the services in the VPC **850** and streams the profile data to the resource manger **310** via the encrypted channel of communications.

When any user creates a task for any service within the VPC **850,** the SRA **812** is configured to manage the task. Task management includes authentication of the user that created the task as being authorized by a particular client to access the VPC **850.** The authentication is performed by transmitting a request from the SRA **812** to an access control service **820.** The access control service **820** is configured to check credentials provided by the user in order to authenticate the user. In one embodiment, the credentials may include a username/password combination that is checked against a database of username/password pairs authorized by the client. If the password provided with the username matches the password store in the database of username/password pairs authorized by the client, then the access control service **820** may authorize the user. An authorized user may be referred to herein as a tenant of the VPC **850.** The access control service **820** transmits a response to the SRA **812** that indicates whether the user for a particular task is an authorized tenant. If the user is an authorized tenant of the VPC **850,** then the SRA **812** manages the execution of the task by a particular service in the VPC **850.** However, if the user is not an authorized tenant of the VPC **850,** then the SRA **812** prevents execution of the task by the services in the VPC **850,** thereby restricting access to the VPC **850** to only authorized tenants.

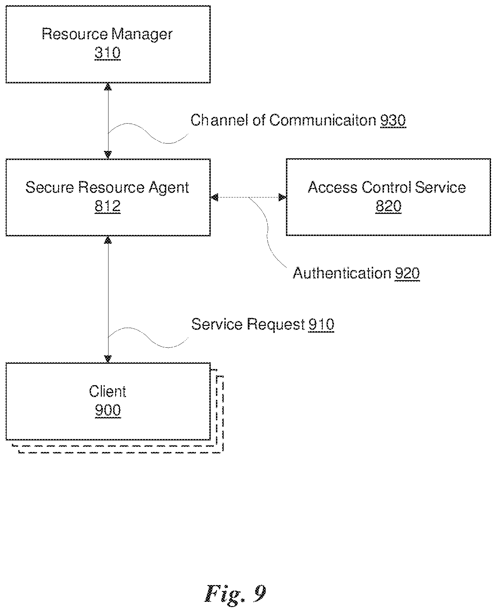

Figure **9** illustrates the communications between a secure resource agent **812,** in accordance with one embodiment. As shown in Figure **9****,** the SRA **812** establishes an encrypted channel of communications **930** with the resource manager **310** in order to request resources to be allocated to the VPC **850**. The SRA **812** also receives service requests **910** from one or more clients **900**. The service requests **910** may be a request to create a task to be executed by a service. The service requests **910** may also include the credentials for a user creating the service request **910**. The SRA **812** transmits an authentication request to the access control service **820** that includes the credentials for the user. If the access control service **820** authenticates the user as an authorized tenant, then the SRA **812** generates a task in response to the service request **910** and manages the execution of the task using the resources allocated to the service by the resource manager **310**. However, if the access control service **820** does not authenticate the user, the SRA **812** may deny the service request **910** and transmit a response to the service request **910** to the client that indicates that the user is not authorized to use the services of the VPC **850**.

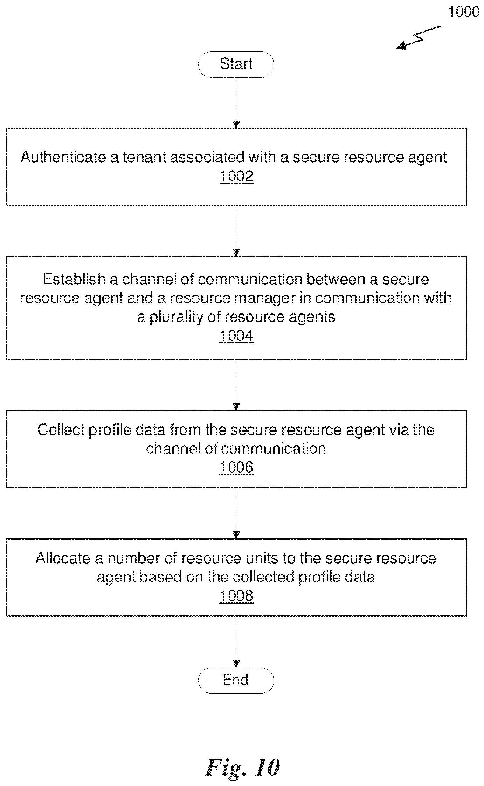

Figures **10** is a flowchart of a method **1000** for managing the allocation of resources in a cloud, in accordance with one embodiment. The method **1000** may be performed by hardware, software, or a combination of hardware and software. In one embodiment, the method **1000** is implemented by a combination of a secure resource agent **812**, the access control service **820**, and the resource manager **310** executed on one or more nodes of the cloud.

At step **1002**, the access control service **820** authenticates a tenant associated with a secure resource agent **812**. In one embodiment, a user initiates a request to utilize a service in a VPC **850** to perform a task. The request includes credentials for the user and is received at the SRA **812** for the VPC **850**. The SRA **812** transmits a request to authenticate the user to the access control service **820**, where the request includes the credentials of the user. The access control service may check the credentials provided by the user against a database of credentials of authorized tenants granted access to the VPC **850**. The access control service **820** transmits a message to the SRA **812** to authenticate the user as an authorized tenant if the credentials provided by the user match the credentials in the database.

At step **1004**, a channel of communication is established between the SRA **812** and a resource manager **310** in communication with a plurality of resource agents. At step **1006**, the resource manager **310** collects profile data from the SRA **812** via the channel of communication. In one embodiment, the SRA **812** may aggregate profile data from a plurality of resource agents implemented in services included within the VPC **850** and stream to aggregate profile data to the resource manger **310** in order to request resources be allocated to the various services in the VPC **850**. At step **1008**, the resource manger **310** allocates a number of resource units to the SRA **812** based on the collected profile data. The SRA **812** manages tasks executed by the services utilizing the number of resource units.

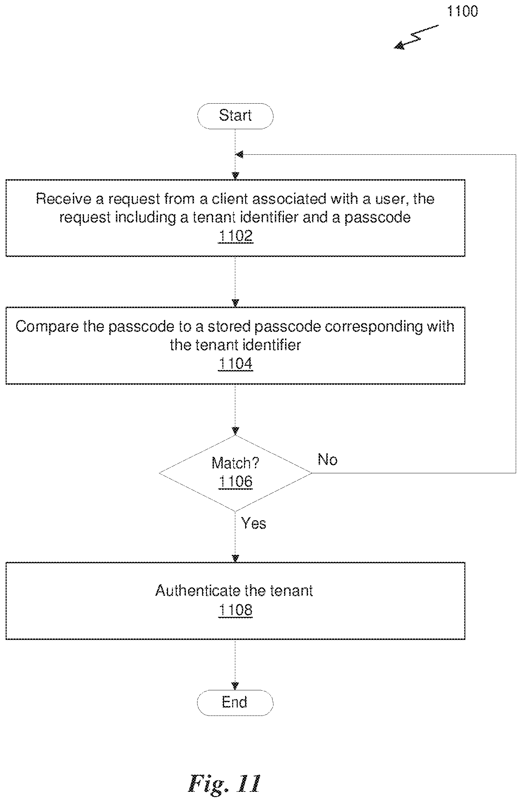

Figures **11** is a flowchart of a method **1100** for authenticating an authorized tenant associated with a virtual private cloud, in accordance with one embodiment. The method **1100** may be performed by hardware, software, or a combination of hardware and software. In one embodiment, the method **1100** is implemented by a combination of a secure resource agent **812**, the access control service **820**, and the resource manager **310** executed on one or more nodes of the cloud.

At step **1102**, a request is received from a client associated with a user. In one embodiment, the request includes credentials including a tenant identifier and a passcode. The request may be a service request transmitted from the client **900** to the SRA **812**. At step **1104**, the passcode is compared to a stored passcode corresponding with the tenant identifier. In one embodiment, the SRA **812** forwards an authentication request to the access control service **820** that includes the tenant identifier and passcode. The access control service **820** uses the tenant identifier to look up a stored passcode corresponding with the tenant identifier in a database. The access control service **820** compares the passcode received in the authentication request with the stored passcode to authenticate the user. At step **1106**, the access control service **820** determines whether the passcode matches the stored passcode. If there is not a match, then the access control service **820** forwards a response to the SRA **812** that indicates the user is not an authorized tenant and the method **1100** returns to step **1102** where other requests may be processed to authenticate one or more other users. However, if there is a match at step **1106**, then, at step **1108**, the access control service **820** authenticates the user as an authorized tenant. The access control service **820** may transmit a message to the SRA **812** that identifies the user as an authorized tenant and the SRA **812** may grant access to the user to execute tasks via the one or more services in the VPC **850**.

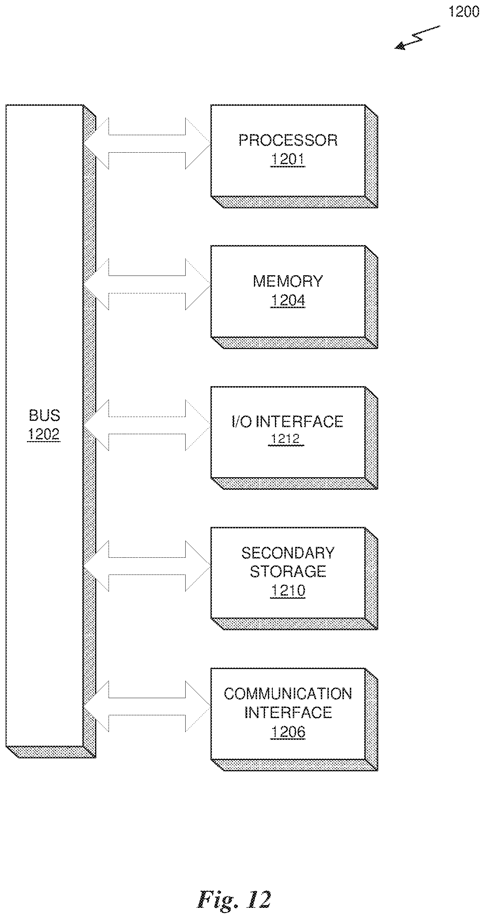

Figure **12** illustrates an exemplary system **1200** in which the various architecture and/or functionality of the various previous embodiments may be implemented. As shown, a system **1200** is provided including at least one processor **1201** that is connected to a communication bus **1202**. The communication bus **1202** may be implemented using any suitable protocol, such as PCI (Peripheral Component Interconnect), PCI-Express, AGP (Accelerated Graphics Port), HyperTransport, or any other bus or point-to-point communication protocol(s). The system **1200** also includes a memory **1204**. Control logic (software) and data are stored in the memory **1204** which may take the form of random access memory (RAM).

The system **1200** also includes an input/output (I/O) interface **1212** and a communication interface **1206**. User input may be received from the input devices **1212**, e.g., keyboard, mouse, touchpad, microphone, and the like. In one embodiment, the communication interface **1206** may be coupled to a graphics processor (not shown) that includes a plurality of shader modules, a rasterization module, etc. Each of the foregoing modules may even be situated on a single semiconductor platform to form a graphics processing unit (GPU).

In the present description, a single semiconductor platform may refer to a sole unitary semiconductor-based integrated circuit or chip. It should be noted that the term single semiconductor platform may also refer to multi-chip modules with increased connectivity which simulate on-chip operation, and make substantial improvements over utilizing a conventional central processing unit (CPU) and bus implementation. Of course, the various modules may also be situated separately or in various combinations of semiconductor platforms per the desires of the user.

The system **1200** may also include a secondary storage **1210**. The secondary storage **1210** includes, for example, a hard disk drive and/or a removable storage drive, representing a floppy disk drive, a magnetic tape drive, a compact disk drive, digital versatile disk (DVD) drive, recording device, universal serial bus (USB) flash memory. The removable storage drive reads from and/or writes to a removable storage unit in a well-known manner.

Computer programs, or computer control logic algorithms, may be stored in the memory **1204** and/or the secondary storage **1210**. Such computer programs, when executed, enable the system **1200** to perform various functions. The memory **1204**, the storage **1210**, and/or any other storage are possible examples of computer-readable media.

In one embodiment, the architecture and/or functionality of the various previous figures may be implemented in the context of the processor **1201**, a graphics processor coupled to communication interface **1206**, an integrated circuit (not shown) that is capable of at least a portion of the capabilities of both the processor **1201** and a graphics processor, a chipset (i.e., a group of integrated circuits designed to work and sold as a unit for performing related functions, etc.), and/or any other integrated circuit for that matter.

Still yet, the architecture and/or functionality of the various previous figures may be implemented in the context of a general computer system, a circuit board system, a game console system dedicated for entertainment purposes, an application-specific system, and/or any other desired system. For example, the system **1200** may take the form of a desktop computer, laptop computer, server, workstation, game consoles, embedded system, and/or any other type of logic. Still yet, the system **1200** may take the form of various other devices including, but not limited to a personal digital assistant (PDA) device, a mobile phone device, a television, etc.

Further, while not shown, the system **1200** may be coupled to a network (e.g., a telecommunications network, local area network (LAN), wireless network, wide area network (WAN) such as the Internet, peer-to-peer network, cable network, or the like) for communication purposes.

In an example embodiment, the system **1200** includes a collection module collecting profile data from a plurality of resource agents, and an allocation module allocating, via a resource manager in communication with the plurality of resource agents, a number of resource units to each resource agent in the plurality of resource agents based on the collected profile data. In some embodiments, the system **1200** may include other or additional modules for performing any one of or combination of steps described in the embodiments. Further, any of the additional or alternative embodiments or aspects of the method, as shown in any of the figures or recited in any of the claims, are also contemplated to include similar modules.

It is noted that the techniques described herein, in an aspect, are embodied in executable instructions stored in a computer readable medium for use by or in connection with an instruction execution machine, apparatus, or device, such as a computer-based or processor-containing machine, apparatus, or device. It will be appreciated by those skilled in the art that for some embodiments, other types of computer readable media are included which may store data that is accessible by a computer, such as magnetic cassettes, flash memory cards, digital video disks, Bernoulli cartridges, random access memory (RAM), read-only memory (ROM), and the like.

As used here, a "computer-readable medium" includes one or more of any suitable media for storing the executable instructions of a computer program such that the instruction execution machine, system, apparatus, or device may read (or fetch) the instructions from the computer readable medium and execute the instructions for carrying out the described methods. Suitable storage formats include one or more of an electronic, magnetic, optical, and electromagnetic format. A non-exhaustive list of conventional exemplary computer readable medium includes: a portable computer diskette; a RAM; a ROM; an erasable programmable read only memory (EPROM or flash memory); optical storage devices, including a portable compact disc (CD), a portable digital video disc (DVD), a high definition DVD (HD-DVD^{™}), a BLU-RAY disc; and the like.

It should be understood that the arrangement of components illustrated in the Figures described are exemplary and that other arrangements are possible. It should also be understood that the various system components (and means) defined by the claims, described below, and illustrated in the various block diagrams represent logical components in some systems configured according to the subject matter disclosed herein.

For example, one or more of these system components (and means) may be realized, in whole or in part, by at least some of the components illustrated in the arrangements illustrated in the described Figures. In addition, while at least one of these components are implemented at least partially as an electronic hardware component, and therefore constitutes a machine, the other components may be implemented in software that when included in an execution environment constitutes a machine, hardware, or a combination of software and hardware.

More particularly, at least one component defined by the claims is implemented at least partially as an electronic hardware component, such as an instruction execution machine (e.g., a processor-based or processor-containing machine) and/or as specialized circuits or circuitry (e.g., discreet logic gates interconnected to perform a specialized function). Other components may be implemented in software, hardware, or a combination of software and hardware. Moreover, some or all of these other components may be combined, some may be omitted altogether, and additional components may be added while still achieving the functionality described herein. Thus, the subject matter described herein may be embodied in many different variations, and all such variations are contemplated to be within the scope of what is claimed.

In the description above, the subject matter is described with reference to acts and symbolic representations of operations that are performed by one or more devices, unless indicated otherwise. As such, it will be understood that such acts and operations, which are at times referred to as being computer-executed, include the manipulation by the processor of data in a structured form. This manipulation transforms the data or maintains it at locations in the memory system of the computer, which reconfigures or otherwise alters the operation of the device in a manner well understood by those skilled in the art. The data is maintained at physical locations of the memory as data structures that have particular properties defined by the format of the data. However, while the subject matter is being described in the foregoing context, it is not meant to be limiting as those of skill in the art will appreciate that various acts and operations described hereinafter may also be implemented in hardware.

To facilitate an understanding of the subject matter described herein, many aspects are described in terms of sequences of actions. At least one of these aspects defined by the claims is performed by an electronic hardware component. For example, it will be recognized that the various actions may be performed by specialized circuits or circuitry, by program instructions being executed by one or more processors, or by a combination of both. The description herein of any sequence of actions is not intended to imply that the specific order described for performing that sequence must be followed. All methods described herein may be performed in any suitable order unless otherwise indicated herein or otherwise clearly contradicted by context.

The use of the terms "a" and "an" and "the" and similar referents in the context of describing the subject matter (particularly in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. Furthermore, the foregoing description is for the purpose of illustration only, and not for the purpose of limitation, as the scope of protection sought is defined by the claims as set forth hereinafter together with any equivalents thereof entitled to. The use of any and all examples, or exemplary language (e.g., "such as") provided herein, is intended merely to better illustrate the subject matter and does not pose a limitation on the scope of the subject matter unless otherwise claimed. The use of the term "based on" and other like phrases indicating a condition for bringing about a result, both in the claims and in the written description, is not intended to foreclose any other conditions that bring about that result. No language in the specification should be construed as indicating any non-claimed element as essential to the practice of the embodiments as claimed.

The embodiments described herein include the one or more modes for carrying out the claimed subject matter.

## Claims

1. A computer-implemented method for allocating resources within a cloud (300) which comprises a plurality of hierarchical layers, the computer-implemented method comprising the steps of:
collecting profile data from a plurality of resource agents (312) in the plurality of hierarchical layers, wherein the resource agents (312) include logic to implement a variety of functions specific to the type of layer and are configured to manage the execution of tasks using a number of resource units allocated; and
allocating, via a unified resource manager (310) in communication with the plurality of resource agents (312) in the plurality of hierarchical layers, the number of resource units to each resource agent in the plurality of resource agents based on the collected profile data, wherein the resource manager (310) is configured to allocate resource units independently to each layer and to have visibility into the resource requirement of each layer based on requests received from the resource agents (312).

2. The method of claim 1, wherein each resource agent (312) in the plurality of resource agents is configured to manage the execution of tasks using the number of resource units allocated to the resource agent.

3. The method of any of claims 1 to 2, wherein the cloud (300) comprises a plurality of nodes in one or more data centers, each node in the plurality of nodes in communication with at least one other node in the plurality of nodes through one or more networks.

4. The method of any of claims 1 to 3, wherein the profile data for a particular resource agent (312) includes a resource type identifier, resource utilization information, and a task execution plan.

5. The method of any of claims 1 to 4, wherein the unified resource manager (310) is configured to generate a resource allocation plan that is stored in a distributed file system in the cloud (300), and wherein each resource agent (312) in the plurality of resource agents is configured to access at least one instance of the resource allocation plan in the distributed file system.

6. The method of any of claims 1 to 5, further comprising:
establishing a secure channel of communication between a secure resource agent (812) and the unified resource manager (310)
authenticating, via an access control service (820), a user associated with the secure resource agent (812) as an authorized tenant;
collecting profile data from the secure resource agent (812) via the secure channel of communication; and
allocating, via the unified resource manager (310), a number of resource units to the secure resource agent 812) based on the collected profile data.

7. The method of claim 6, wherein the secure resource agent (812) is configured to manage the execution of tasks within a virtual private cloud (850).

8. A system for allocating resources within a cloud (300) which comprises a plurality of hierarchical layers, comprising:
a non-transitory memory storage comprising instructions; and
one or more processors in communication with the memory, wherein the one or more processors execute the instructions to:
collect profile data from a plurality of resource agents (312) in the plurality of hierarchical layers, wherein the resource agents (312) include logic to implement a variety of functions specific to the type of layer and are configured to manage the execution of tasks using a number of resource units allocated, and
allocate, via a unified resource manager (310) in communication with the plurality of resource agents (312) in the plurality of hierarchical layers, the number of resource units to each resource agent (312) in the plurality of resource agents based on the collected profile data, wherein the resource manager (310) is configured to allocate resource units independently to each layer and to have visibility into the resource requirement of each layer based on requests received from the resource agents (312).

9. The system of claim 8, wherein each resource agent (312) in the plurality of resource agents is configured to manage the execution of tasks using the number of resource units allocated to the resource agent (312).

10. The system of any of claims 8 to 9, wherein the cloud (300) comprises a plurality of nodes in one or more data centers, each node in the plurality of nodes in communication with at least one other node in the plurality of nodes through one or more networks.

11. The system of any of claims 8 to 10, wherein the profile data for a particular resource agent (312) includes a resource type identifier, resource utilization information, and a task execution plan.

12. The system of any of claims 8 to 11, wherein the unified resource manager (310) is configured to generate a resource allocation plan that is stored in a distributed file system in the cloud (310), and wherein each resource agent in the plurality of resource agents (312) is configured to access at least one instance of the resource allocation plan in the distributed file system.

13. The system of any of claims 8 to 12, wherein the one or more processors execute the instructions to:
establish a secure channel of communication between a secure resource agent (812) and the unified resource manager (310);
authenticate, via an access control service (820), a user associated with the secure resource agent (812) as an authorized tenant;
collect profile data from the secure resource agent (812) via the secure channel of communication; and
allocate, via the unified resource manager (310), a number of resource units to the secure resource agent (812) based on the collected profile data.

14. The system of claim 13, wherein the secure resource agent (812) is configured to manage the execution of tasks within a virtual private cloud (850).

15. A non-transitory computer-readable media storing computer instructions for allocating resources within a cloud (300), which comprises a plurality of hierarchical layers, that, when executed by one or more processors, cause the one or more processors to perform the steps of:
collecting profile data from a plurality of resource agents (312) in the plurality of hierarchical layers executed on one or more nodes in the cloud (300), wherein the resource agents (312) include logic to implement a variety of functions specific to the type of layer and are configured to manage the execution of tasks using a number of resource units allocated;
allocating, via a unified resource manager (310) in communication with the plurality of resource agents (312) in the plurality of hierarchical layers, the number of resource units to each resource agent (312) in the plurality of resource agents based on the collected profile data, wherein the resource manager (310) is configured to allocate resource units independently to each layer and to have visibility into the resource requirement of each layer based on requests received from the resource agents (312).

## Patentansprüche

1. Computerimplementiertes Verfahren zur Zuweisung von Ressourcen innerhalb einer Cloud (300), die eine Vielzahl von hierarchischen Schichten umfasst, wobei das computerimplementierte Verfahren die folgenden Schritte umfasst:
Sammeln von Profildaten aus einer Vielzahl von Ressourcenagenten (312) in der Vielzahl von hierarchischen Schichten, wobei die Ressourcenagenten (312) Logik beinhalten, um eine Vielfalt von Funktionen zu implementieren, die für den Schichttyp spezifisch sind, und konfiguriert sind, um die Ausführung von Aufgaben unter Verwendung einer Anzahl von zugewiesenen Ressourceneinheiten zu verwalten; und
Zuweisen der Anzahl von Ressourceneinheiten zu jedem Ressourcenagenten in der Vielzahl von Ressourcenagenten basierend auf den gesammelten Profildaten über einen einheitlichen Ressourcenverwalter (310), der in Kommunikation mit der Vielzahl von Ressourcenagenten (312) in der Vielzahl von hierarchischen Schichten steht, wobei der Ressourcenverwalter (310) konfiguriert ist, um jeder Schicht unabhängig Ressourceneinheiten zuzuweisen und um Einsicht in den Ressourcenbedarf jeder Schicht basierend auf von den Ressourcenagenten (312) empfangenen Anforderungen zu haben.

2. Verfahren nach Anspruch 1, wobei jeder Ressourcenagent (312) in der Vielzahl von Ressourcenagenten konfiguriert ist, um die Ausführung von Aufgaben unter Verwendung der dem Ressourcenagenten zugewiesenen Anzahl von Ressourceneinheiten zu verwalten.

3. Verfahren nach einem der Ansprüche 1 bis 2, wobei die Cloud (300) eine Vielzahl von Knoten in einem oder mehreren Datencenters umfasst, wobei jeder Knoten in der Vielzahl von Knoten in Kommunikation mit mindestens einem anderen Knoten in der Vielzahl von Knoten über ein oder mehrere Netzwerke steht.

4. Verfahren nach einem der Ansprüche 1 bis 3, wobei die Profildaten für einen bestimmten Ressourcenagenten (312) eine Ressourcentypkennung, Ressourcennutzungsinformationen und einen Aufgabenausführungsplan beinhalten.

5. Verfahren nach einem der Ansprüche 1 bis 4, wobei der einheitliche Ressourcenverwalter (310) konfiguriert ist, um einen Ressourcenzuweisungsplan zu erzeugen, der in einem verteilten Dateisystem in der Cloud (300) gespeichert ist, und wobei jeder Ressourcenagent (312) in der Vielzahl von Ressourcenagenten konfiguriert ist, um auf mindestens eine Instanz des Ressourcenzuordnungsplans in dem verteilten Dateisystem zuzugreifen.

6. Verfahren nach einem der Ansprüche 1 bis 5, ferner umfassend:
Einrichten eines sicheren Kommunikationskanals zwischen einem sicheren Ressourcenagenten (812) und dem einheitlichen Ressourcenverwalter (310)
Authentifizieren eines Benutzers, der dem sicheren Ressourcenagenten (812) zugeordnet ist, über einen Zugangskontrolldienst (820) als ein autorisierter Mandant;
Sammeln von Profildaten aus dem sicheren Ressourcenagenten (812) über den sicheren Kommunikationskanal; und
Zuweisen einer Anzahl von Ressourceneinheiten über den einheitlichen Ressourcenverwalter (310) zu dem sicheren Ressourcenagenten (812) basierend auf den gesammelten Profildaten.

7. Verfahren nach Anspruch 6, wobei der sichere Ressourcenagent (812) konfiguriert ist, um die Ausführung von Aufgaben innerhalb einer virtuellen privaten Cloud (850) zu verwalten.

8. System zur Zuweisung von Ressourcen innerhalb einer Cloud (300), die eine Vielzahl von hierarchischen Schichten umfasst, umfassend:
ein nichtflüchtiges Speichermedium, das Anweisungen umfasst; und
einen oder mehrere Prozessoren, die in Kommunikation mit dem Speicher stehen, wobei der eine oder die mehreren Prozessoren die Anweisungen zu Folgendem ausführen:
Sammeln von Profildaten aus einer Vielzahl von Ressourcenagenten (312) in der Vielzahl von hierarchischen Schichten, wobei die Ressourcenagenten (312) Logik beinhalten, um eine Vielfalt von Funktionen zu implementieren, die für den Schichttyp spezifisch sind, und konfiguriert sind, um die Ausführung von Aufgaben unter Verwendung einer Anzahl von zugewiesenen Ressourceneinheiten zu verwalten, und
Zuweisen der Anzahl von Ressourceneinheiten zu jedem Ressourcenagenten (312) in der Vielzahl von Ressourcenagenten basierend auf den gesammelten Profildaten über einen einheitlichen Ressourcenverwalter (310), der in Kommunikation mit der Vielzahl von Ressourcenagenten (312) in der Vielzahl von hierarchischen Schichten steht, wobei der Ressourcenverwalter (310) konfiguriert ist, um jeder Schicht unabhängig Ressourceneinheiten zuzuweisen und um Einsicht in den Ressourcenbedarf jeder Schicht basierend auf von den Ressourcenagenten (312) empfangenen Anforderungen zu haben.

9. System nach Anspruch 8, wobei jeder Ressourcenagent (312) in der Vielzahl von Ressourcenagenten konfiguriert ist, um die Ausführung von Aufgaben unter Verwendung der dem Ressourcenagenten (312) zugewiesenen Anzahl von Ressourceneinheiten zu verwalten.

10. System nach einem der Ansprüche 8 bis 9, wobei die Cloud (300) eine Vielzahl von Knoten in einem oder mehreren Datencenters umfasst, wobei jeder Knoten in der Vielzahl von Knoten in Kommunikation mit mindestens einem anderen Knoten in der Vielzahl von Knoten über ein oder mehrere Netzwerke steht.

11. System nach einem der Ansprüche 8 bis 10, wobei die Profildaten für einen bestimmten Ressourcenagenten (312) eine Ressourcentypkennung, Ressourcennutzungsinformationen und einen Aufgabenausführungsplan beinhalten.

12. System nach einem der Ansprüche 8 bis 11, wobei der einheitliche Ressourcenverwalter (310) konfiguriert ist, um einen Ressourcenzuweisungsplan zu erzeugen, der in einem verteilten Dateisystem in der Cloud (310) gespeichert ist, und wobei jeder Ressourcenagent in der Vielzahl von Ressourcenagenten (312) konfiguriert ist, um auf mindestens eine Instanz des Ressourcenzuordnungsplans in dem verteilten Dateisystem zuzugreifen.

13. System nach einem der Ansprüche 8 bis 12, wobei der eine oder die mehreren Prozessoren die Anweisungen zu Folgendem ausführen:
Einrichten eines sicheren Kommunikationskanals zwischen einem sicheren Ressourcenagenten (812) und dem einheitlichen Ressourcenverwalter (310);
Authentifizieren eines Benutzers, der dem sicheren Ressourcenagenten (812) zugeordnet ist, über einen Zugangskontrolldienst (820) als autorisierter Mandant;
Sammeln von Profildaten aus dem sicheren Ressourcenagenten (812) über den sicheren Kommunikationskanal; und
Zuweisen einer Anzahl von Ressourceneinheiten über den einheitlichen Ressourcenverwalter (310) zu dem sicheren Ressourcenagenten (812) basierend auf den gesammelten Profildaten.

14. System nach Anspruch 13, wobei der sichere Ressourcenagent (812) konfiguriert ist, um die Ausführung von Aufgaben innerhalb einer virtuellen privaten Cloud (850) zu verwalten.

15. Nichtflüchtiges computerlesbares Medium, das Computeranweisungen zur Zuweisung von Ressourcen innerhalb einer Cloud (300) speichert, die eine Vielzahl von hierarchischen Schichten umfasst, die, wenn sie von einem oder mehreren Prozessoren ausgeführt werden, den einen oder die mehreren Prozessoren veranlassen, die folgenden Schritte durchzuführen:
Sammeln von Profildaten aus einer Vielzahl von Ressourcenagenten (312) in der Vielzahl von hierarchischen Schichten, die auf einem oder mehreren Knoten in der Cloud (300) ausgeführt werden, wobei die Ressourcenagenten (312) Logik beinhalten, um eine Vielfalt von Funktionen zu implementieren, die für den Schichttyp spezifisch sind, und konfiguriert sind, um die Ausführung von Aufgaben unter Verwendung einer Anzahl von zugewiesenen Ressourceneinheiten zu verwalten;
Zuweisen der Anzahl von Ressourceneinheiten zu jedem Ressourcenagenten (312) in der Vielzahl von Ressourcenagenten basierend auf den gesammelten Profildaten über einen einheitlichen Ressourcenverwalter (310), der in Kommunikation mit der Vielzahl von Ressourcenagenten (312) in der Vielzahl von hierarchischen Schichten steht, wobei der Ressourcenverwalter (310) konfiguriert ist, um jeder Schicht unabhängig Ressourceneinheiten zuzuweisen und um Einsicht in den Ressourcenbedarf jeder Schicht basierend auf von den Ressourcenagenten (312) empfangenen Anforderungen zu haben.

## Revendications

1. Procédé mis en œuvre par ordinateur pour allouer des ressources dans un nuage (300) qui comprend une pluralité de couches hiérarchiques, le procédé mis en œuvre par ordinateur comprenant les étapes :
de collecte de données de profil à partir d'une pluralité d'agents de ressources (312) dans la pluralité de couches hiérarchiques, dans lequel les agents de ressources (312) comportent une logique pour mettre en œuvre une variété de fonctions spécifiques au type de couche et sont configurés pour gérer l'exécution de tâches à l'aide d'un certain nombre d'unités de ressources allouées ; et
d'allocation, via un gestionnaire de ressources unifié (310) en communication avec la pluralité d'agents de ressources (312) dans la pluralité de couches hiérarchiques, du nombre d'unités de ressources à chaque agent de ressources dans la pluralité d'agents de ressources sur la base des données de profil collectées, dans lequel le gestionnaire de ressources (310) est configuré pour allouer des unités de ressources indépendamment à chaque couche et pour avoir une visibilité sur les besoins en ressources de chaque couche sur la base des demandes reçues des agents de ressources (312).

2. Procédé selon la revendication 1, dans lequel chaque agent de ressources (312) dans la pluralité d'agents de ressources est configuré pour gérer l'exécution de tâches à l'aide du nombre d'unités de ressources allouées à l'agent de ressources.

3. Procédé selon l'une quelconque des revendications 1 à 2, dans lequel le nuage (300) comprend une pluralité de nœuds dans un ou plusieurs centres de données, chaque nœud dans la pluralité de nœuds étant en communication avec au moins un autre nœud dans la pluralité de nœuds à travers un ou plusieurs réseaux.

4. Procédé selon l'une quelconque des revendications 1 à 3, dans lequel les données de profil pour un agent de ressources (312) particulier comportent un identifiant de type de ressource, des informations d'utilisation de ressource et un plan d'exécution de tâche.

5. Procédé selon l'une quelconque des revendications 1 à 4, dans lequel le gestionnaire de ressources unifié (310) est configuré pour générer un plan d'allocation de ressources qui est stocké dans un système de fichier distribué dans le nuage (300), et dans lequel chaque agent de ressources (312) dans la pluralité d'agents de ressources est configuré pour accéder à au moins une instance du plan d'allocation de ressources dans le système de fichier distribué.

6. Procédé selon l'une quelconque des revendications 1 à 5, comprenant en outre :
l'établissement d'un canal de communication sécurisé entre un agent de ressources sécurisé (812) et le gestionnaire de ressources unifié (310)
l'authentification, via un service de commande d'accès (820), d'un utilisateur associé à l'agent de ressources sécurisé (812) en tant que locataire autorisé ;
la collecte de données de profil à partir de l'agent de ressources sécurisé (812) via le canal de communication sécurisé ; et
l'allocation, via le gestionnaire de ressources unifié (310), d'un certain nombre d'unités de ressources à l'agent de ressources sécurisé (812) sur la base des données de profil collectées.

7. Procédé selon la revendication 6, dans lequel l'agent de ressources sécurisé (812) est configuré pour gérer l'exécution de tâches dans un nuage privé virtuel (850).

8. Système d'allocation de ressources dans un nuage (300) qui comprend une pluralité de couches hiérarchiques, comprenant :
un stockage de mémoire non transitoire comprenant des instructions ; et
un ou plusieurs processeurs en communication avec la mémoire, dans lequel les un ou plusieurs processeurs exécutent les instructions pour :
collecter des données de profil à partir d'une pluralité d'agents de ressources (312) dans la pluralité de couches hiérarchiques, dans lequel les agents de ressources (312) comportent une logique pour mettre en œuvre une variété de fonctions spécifiques au type de couche et sont configurés pour gérer l'exécution de tâches à l'aide d'un certain nombre d'unités de ressources allouées, et
allouer, via un gestionnaire de ressources unifié (310) en communication avec la pluralité d'agents de ressources (312) dans la pluralité de couches hiérarchiques, le nombre d'unités de ressources à chaque agent de ressources (312) dans la pluralité d'agents de ressources sur la base des données de profil collectées, dans lequel le gestionnaire de ressources (310) est configuré pour allouer des unités de ressources indépendamment à chaque couche et pour avoir une visibilité sur les besoins en ressources de chaque couche sur la base des demandes reçues des agents de ressources (312).

9. Système selon la revendication 8, dans lequel chaque agent de ressources (312) dans la pluralité d'agents de ressources est configuré pour gérer l'exécution de tâches à l'aide du nombre d'unités de ressources allouées à l'agent de ressources (312).

10. Système selon l'une quelconque des revendications 8 à 9, dans lequel le nuage (300) comprend une pluralité de nœuds dans un ou plusieurs centres de données, chaque nœud dans la pluralité de nœuds étant en communication avec au moins un autre nœud dans la pluralité de nœuds à travers un ou plusieurs réseaux.

11. Système selon l'une quelconque des revendications 8 à 10, dans lequel les données de profil pour un agent de ressources (312) particulier comportent un identifiant de type de ressource, des informations d'utilisation de ressource et un plan d'exécution de tâche.

12. Système selon l'une quelconque des revendications 8 à 11, dans lequel le gestionnaire de ressources unifié (310) est configuré pour générer un plan d'allocation de ressources qui est stocké dans un système de fichier distribué dans le nuage (310), et dans lequel chaque agent de ressources dans la pluralité d'agents de ressources (312) est configuré pour accéder à au moins une instance du plan d'allocation de ressources dans le système de fichier distribué.

13. Système selon l'une quelconque des revendications 8 à 12, dans lequel les un ou plusieurs processeurs exécutent les instructions pour :
établir un canal de communication sécurisé entre un agent de ressources sécurisé (812) et le gestionnaire de ressources unifié (310) ;
authentifier, via un service de commande d'accès (820), un utilisateur associé à l'agent de ressources sécurisé (812) en tant que locataire autorisé ;
collecter des données de profil à partir de l'agent de ressources sécurisé (812) via le canal de communication sécurisé ; et
allouer, via le gestionnaire de ressources unifié (310), un certain nombre d'unités de ressources à l'agent de ressources sécurisé (812) sur la base des données de profil collectées.

14. Système selon la revendication 13, dans lequel l'agent de ressources sécurisé (812) est configuré pour gérer l'exécution de tâches dans un nuage privé virtuel (850).

15. Support non transitoire lisible par ordinateur stockant des instructions informatiques pour allouer des ressources dans un nuage (300), qui comprend une pluralité de couches hiérarchiques, qui, lorsqu'elles sont exécutées par un ou plusieurs processeurs, amènent les un ou plusieurs processeurs à réaliser les étapes :
de collecte de données de profil à partir d'une pluralité d'agents de ressources (312) dans la pluralité de couches hiérarchiques exécutées sur un ou plusieurs nœuds dans le nuage (300), dans lequel les agents de ressources (312) comportent une logique pour mettre en œuvre une variété de fonctions spécifiques au type de couche et sont configurés pour gérer l'exécution de tâches à l'aide d'un certain nombre d'unités de ressources allouées ;
d'allocation, via un gestionnaire de ressources unifié (310) en communication avec la pluralité d'agents de ressources (312) dans la pluralité de couches hiérarchiques, du nombre d'unités de ressources à chaque agent de ressources (312) dans la pluralité d'agents de ressources sur la base des données de profil collectées, dans lequel le gestionnaire de ressources (310) est configuré pour allouer des unités de ressources indépendamment à chaque couche et pour avoir une visibilité sur les besoins en ressources de chaque couche sur la base des demandes reçues des agents de ressources (312).
